# DEMANDE DE BREVET EUROPEEN

(11) **EP 1 428 450 A1**
(43) Date de publication de la demande: **16.06.2004**
(21) Numéro de dépôt: 02406073.3
(22) Date de dépôt: 09.12.2002
(51) Int. Cl.: A44C 5/00

(54) **Montre à bracelet élastique en un seul brin**

(71) Demandeur: Yeager, Rebecca, 2520 La Neuveville (CH)
(72) Inventeur: Yeager, Rebecca, 2520 La Neuveville (CH)
(74) Mandataire: Gresset, Jean

(57) **Abrégé**

L'invention concerne une montre bracelet dotée de constituants fonctionnels et d'un bracelet à ressort en un seul brin constitué d'une lame métallique élastique (12) possédant deux états stables dans lesquels elle est respectivement allongée et enroulée. Ses constituants fonctionnels, comportant notamment un affichage LCD souple (16) et deux touches de commande (26), sont disposés sur un circuit imprimé souple fixé sur l'une des extrémités (28) de la lame (12). Le tout est glissé à l'intérieur d'un fourreau de protection (50) muni d'une fenêtre transparente en regard de l'affichage LCD (16).

## Description

La présente invention se rapporte aux montres dont le bracelet comporte un seul brin élastique. Elle concerne, plus particulièrement, une montre dont le bracelet est une lame formant ressort qui a une forme incurvée de manière à s'enrouler autour du poignet.

Une pièce de ce type est décrite dans le document DE 4 029 223. Le bracelet est une simple bande ressort dotée d'un seul état stable, celui pour lequel elle est enroulée, selon la configuration qui lui a été donnée lors de sa fabrication. Cette construction procure, certes, un effet esthétique original mais son intérêt est limité par le fait que, selon le diamètre du poignet, le bracelet est plus ou moins serré, sans que l'on puisse rien y faire, ce qui n'est pas forcément du goût de tous. De plus, comme il s'agit d'un ressort, la mise en place du bracelet et son enlèvement ne sont pas des opérations faciles ou, du moins agréables.

La présente invention a pour but de fournir une montre à bracelet élastique en un seul brin, qui est totalement exempte de ces inconvénients.

De façon plus précise, l'invention concerne une montre bracelet dotée de constituants fonctionnels et d'un bracelet à ressort en un seul brin, caractérisée en ce que le bracelet est une lame métallique élastique possédant deux états stables dans lesquels elle est respectivement allongée et enroulée.

De façon avantageuse, les deux états stables de la lame résultent d'un double laminage, l'un dans le sens de la longueur, l'autre dans le sens de la largeur. Elle a une épaisseur comprise entre 0.10 et 1 mm, une largeur comprise entre 2 et 4 cm et une longueur comprise entre 20 et 30 cm.

Selon un mode de réalisation préféré, la montre selon l'invention est une montre électronique qui présente encore les principales caractéristiques suivantes :
- ses constituants sont fixés sur un circuit imprimé souple lié à la lame et doté de pistes conductrices les reliant les uns aux autres;
- le circuit imprimé est lié à la lame par un plot de colle disposé en son milieu et sur l'axe longitudinal de la lame;
- les constituants rigides, oscillateur à quartz (18), circuit intégré (20) et source d'alimentation (22) sont disposés sur les bords de la lame (12);
- le circuit imprimé est découpé, tout autour des constituants rigides, exception faite des pistes conductrices qui les relient aux autres constituants;
- l'organe de commande de la montre est disposé en regard du plot de colle, dans l'axe longitudinal de la lame;
- la source d'alimentation est un accumulateur couplé à un générateur thermoélectrique fixé sur la lame au moyen d'une colle thermoconductrice;
- la montre possède un affichage LCD constitué de deux bandes souples respectivement destinées à afficher l'heure et la minute, et comportant respectivement douze cases alignées en colonne portant la série des nombres 1, 2, 3, 4, 5, 6, 7, 8, 9, 10, 11 et 12 et douze cases alignées en colonne portant la série des nombres 00, 05, 10, 15, 20, 25, 30, 35, 40, 45, 50 et 55.
- la montre est glissée dans un fourreau en plastique souple (50).

D'autres caractéristiques de l'invention apparaîtront plus explicitement à la lecture de la description qui va suivre, faite en regard du dessin annexé dans lequel :
- la figure 1 représente la montre bracelet, vue de dessus, en position déployée,
- la figure 2 est une vue en perspective de la montre en position enroulée,
- les figures 3 et 4 représentent la lame élastique respectivement dans ses deux états stables,
- la figure 5 est une vue de dessus écorchée de la montre, et
- les figures 6, 7 et 8 sont des coupes de la figure 5 respectivement selon VI-VI, VII-VII et VIII-VIII.

Sur les figures, on a représenté une montre électronique 10 à bracelet élastique en un seul brin, comportant :
- une lame élastique 12, possédant deux états stables, dans lesquels elle est respectivement allongée et enroulée;
- un circuit imprimé souple 14 fixé sur la lame 12 et supportant un affichage LCD souple 16 destiné à indiquer le temps courant, un oscillateur à quartz 18, un circuit intégré 20, un accumulateur 22, un générateur thermoélectrique 24 et deux touches de mise à l'heure 26, ces différents composants étant, de manière connue, reliés entre eux par des pistes conductrices (non représentées) déposées sur le circuit imprimé 14.

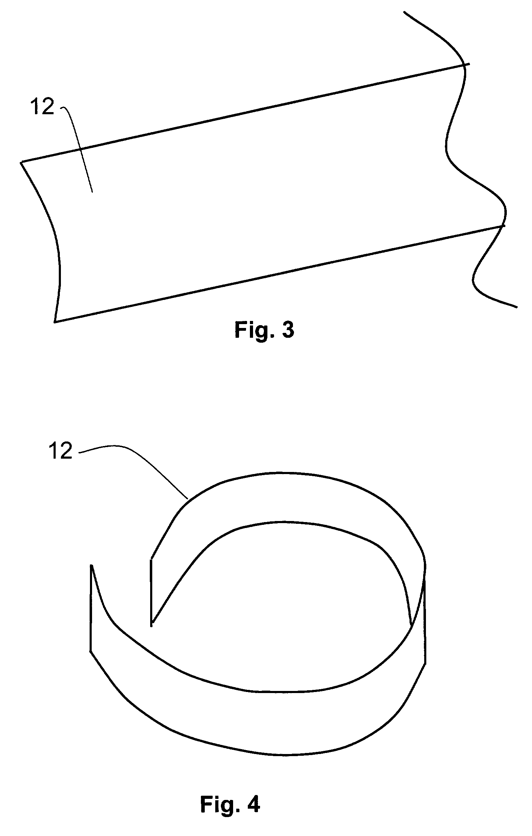

La lame élastique 12 est en acier inoxydable. Elle a, typiquement, une épaisseur comprise entre 0.10 et 0.20mm, une largeur comprise entre 2 et 4cm et une longueur comprise entre 20 et 30cm. De façon avantageuse, son épaisseur est de 0.15mm, sa largeur de 3cm et sa longueur de 25cm, ce qui correspond environ à un tour et demi d'un avant-bras. Les deux états stables de la lame 12 sont respectivement représentés sur les figures 3 et 4. Dans le premier état (figure 3), elle est à plat et présente alors une légère courbure transversale. Dans le deuxième état (figure 4), elle est enroulée dans sa longueur, la courbure transversale ayant disparu.

De telles caractéristiques sont obtenues par un double laminage de la lame 12, d'abord dans le sens de la longueur, puis dans le sens de la largeur. Le premier laminage a pour effet d'étirer l'une des faces plus que l'autre, ce qui confère à la lame une élasticité à l'enroulement dans sa longueur. Le deuxième laminage de la lame lui donne la courbure transversale, de manière à ce que la concavité soit dirigée vers l'extérieur lorsqu'elle s'enroule.

Ainsi, lorsque la lame 12 est à plat, la courbure transversale empêche l'élasticité à l'enroulement de s'exprimer, ce qui fournit la première position stable (figure 3). A la moindre impulsion d'enroulement donnée, l'équilibre établi est rompu et la lame s'enroule automatiquement jusqu'à la deuxième position stable (figure 4).

Pour une meilleure compréhension, on définira dans la suite de la description comme intérieur tout ce qui est orienté du côté de l'intérieur de l'anneau formé par la lame 12 lorsqu'elle est enroulée et, comme extérieur ce qui est orienté dans la direction de l'autre face de la lame.

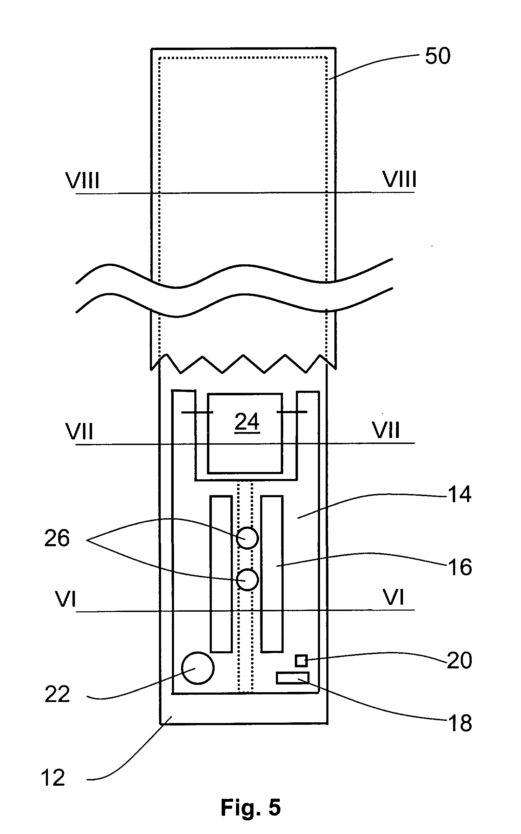

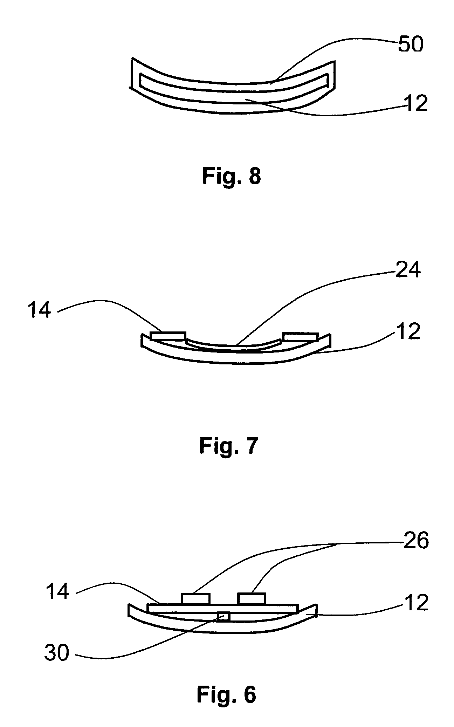

Comme le montre la figure 5, le circuit imprimé souple 14 a la forme d'un rectangle, légèrement moins large que la lame 12. Il est collé sur une extrémité 28 de la face extérieure de la lame 12, au moyen d'un plot de colle élastique 30, aussi visible sur la figure 6, déposé en son milieu et sur l'axe longitudinal de la lame. Ainsi, le plot 30 conserve toute sa souplesse et se prête aux déformations de la lame 12, sans contrarier l'élasticité de celle-ci.

Du côté opposé à l'extrémité 28 de la lame, le circuit 14 a la forme d'une fourche à deux doigts 32, dégageant un espace libre 34 .

Le générateur thermoélectrique 24 se présente sous la forme d'une plaquette souple, dotée d'une face extérieure 36 et d'une face intérieure 38. Il est avantageusement du type faisant l'objet de la demande EP-02405040.3 et ne sera donc pas décrit plus en détail. On se contentera de rappeler qu'il a pour fonction de convertir en énergie électrique une différence de température perçue entre ses deux faces. A titre d'exemple, un générateur de 4 cm² permet d'obtenir une puissance de 10 µW à ses bornes 40.

Le générateur thermoélectrique 24 prend place dans l'espace 34 défini entre les doigts 32 du circuit imprimé 14. Sa face intérieure 38 est directement collée sur la lame 12 au moyen d'une couche de colle élastique thermoconductrice 42 visible sur la figure 7. Les bornes 40 sont reliées aux pistes conductrices du circuit imprimé par des fils 44.

L'affichage LCD souple 16 est collé sur la face extérieure du circuit imprimé 14. Il est constitué de deux bandes 46 et 48, respectivement destinées à afficher l'heure et la minute. La bande 46 comporte douze cases alignées en colonne, qui affichent la série des nombres 1, 2, 3, 4, 5, 6, 7, 8, 9, 10, 11 et 12. La bande 48 comporte également douze cases alignées en colonne, qui affichent la série des nombres 00, 05, 10, 15, 20, 25, 30, 35, 40, 45, 50 et 55.

L'oscillateur à quartz 18, le circuit intégré 20, l'accumulateur 22 et les touches 26 sont des éléments rigides qui ne peuvent donc pas s'adapter aux déformations de la lame 12.

Afin de perturber le moins possible l'élasticité du système, l'oscillateur 18, le circuit intégré 20 et l'accumulateur 22 sont désolidarisés de la lame 12 en les positionnant au bord du circuit imprimé 14, c'est à dire le plus loin possible du plot de colle 30 qui constitue le lien souple entre le circuit 14 et la lame 12. Par ailleurs, l'oscillateur 18, qui est un composant allongé, est orienté dans le sens de la largeur de la lame. Enfin, le circuit imprimé 14 est découpé, tout autour des ces éléments, exception faite des pistes conductrices qui les relient aux autres composants.

Quant aux deux touches de commande 26, elles sont disposées sur l'axe de la lame 12, le long du plot de colle 30. Il est ainsi possible d'exercer sur elles la pression nécessaire pour les actionner.

Selon l'invention, afin de rendre la montre 10 étanche et de la protéger des agressions extérieures, l'ensemble qui vient d'être décrit est glissé dans un fourreau en plastique souple 50, particulièrement visible aux figures 5 et 8, qui, par sa couleur et/ou les motifs de sa décoration, assure l'esthétique de la montre, notamment en cachant le circuit imprimé 14.

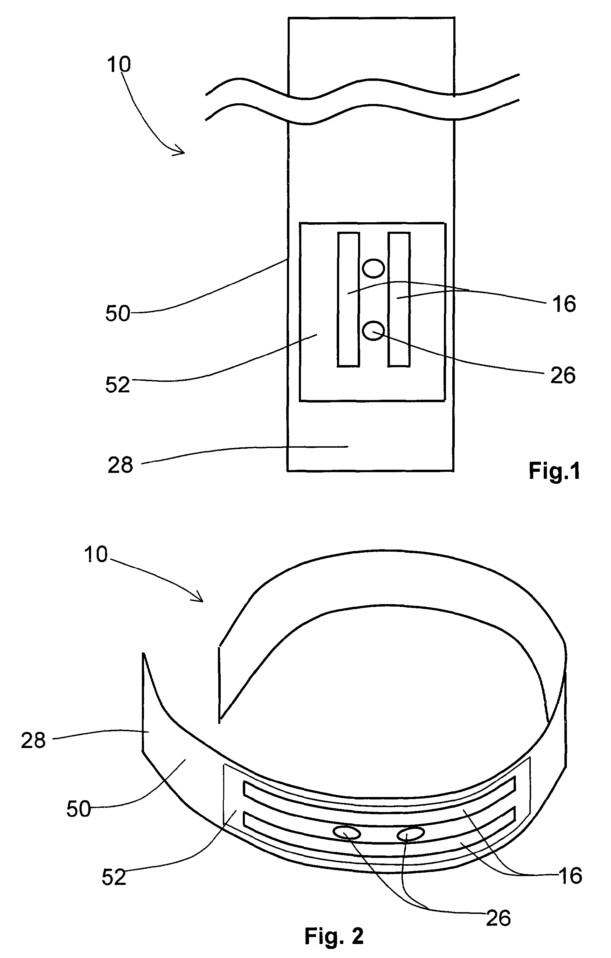

Bien entendu, comme le montrent les figures 1 et 2, le fourreau 50 possède une fenêtre transparente 52 en regard de l'affichage LCD 16 et des touches de mise à l'heure 26.

En outre, le fourreau 50 remplit une fonction de sécurité en recouvrant les arêtes de la lame 12 qui peuvent être tranchantes en raison de leur finesse.

Il peut être avantageux que le fourreau 50 ne recouvre pas la face intérieure de la lame 12 en regard du générateur thermoélectrique 24, afin de ne pas perturber l'établissement du gradient thermique entre ses deux faces 38 et 40.

Pour exposer l'utilisation et le fonctionnement de la montre selon l'invention, on se référera maintenant, plus spécialement, aux figures 1 et 2.

Sur la figure 1, la montre 10 est posée à plat, sa lame élastique étant en position de repos ou déployée. Lorsqu'un utilisateur veut la passer à son poignet, il lui suffit de la saisir par l'extrémité 28, la face extérieure dirigée vers le haut, et de la fouetter sur son poignet pour qu'elle s'enroule automatiquement autour de celui-ci. L'élasticité de la lame 12 est alors suffisante pour que la montre 10 soit solidement maintenue en place.

Lorsque la montre 10 est ainsi positionnée, la face intérieure de la lame élastique 12 et, plus particulièrement, sa zone en regard du générateur thermoélectrique 24, est au contact de la peau, tandis que la face extérieure de la montre est à l'air libre, ce qui assure une différence moyenne de température de plusieurs degrés entre les faces 38 et 40 du générateur 24. Celui-ci est alors en mesure de fournir une puissance électrique suffisante pour charger l'accumulateur 22 servant à alimenter les différents organes de la montre 10.

Lorsque le porteur veut enlever sa montre, il n'a qu'à la saisir par son extrémité 28 et à la tirer de manière à ce qu'elle se déroule, jusqu'à atteindre à nouveau sa première position stable. La montre 10 est alors allongée et peut être rangée simplement.

Ainsi est réalisée une montre à bracelet élastique en un seul brin s'adaptant parfaitement à l'avant-bras de son porteur. De plus, l'existence de deux positions stables procure une grande facilité pour la pose et la dépose de la montre.

Le mode de réalisation qui vient d'être décrit n'est qu'un exemple particulier qui ne limite pas la portée de l'invention. D'autres moyens d'affichage ou d'alimentation électrique peuvent, par exemple, être adaptés sur une lame élastique du type de la lame 12 pour fournir une montre qui reste dans le cadre de l'invention.

## Revendications

1. Montre bracelet dotée de constituants fonctionnels et d'un bracelet à ressort en un seul brin, **caractérisée en ce que** le bracelet est une lame métallique élastique (12) possédant deux états stables dans lesquels elle est respectivement allongée et enroulée.

2. Montre bracelet selon la revendication 1, **caractérisée en ce que** les deux états stables de ladite lame (12) résultent d'un double laminage, l'un dans le sens de la longueur, l'autre dans le sens de la largeur.

3. Montre bracelet selon la revendication 1, **caractérisée en ce que** ladite lame (12) a une épaisseur comprise entre 0.10 et 0.20 mm, une largeur comprise entre 2 et 4 cm et une longueur comprise entre 20 et 30 cm.

4. Montre bracelet selon la revendication 1, **caractérisée en ce que** ses constituants fonctionnels sont disposés sur l'une des extrémités de ladite lame (12).

5. Montre bracelet électronique selon la revendication 4, **caractérisée en ce que** ses constituants sont fixés sur un circuit imprimé souple (14) lié à la lame (12) et doté de pistes conductrices les reliant les uns aux autres.

6. Montre bracelet électronique selon la revendication 5, **caractérisée en ce que** ledit circuit imprimé (14) est lié à la lame (12) par un plot de colle (30) disposé en son milieu et sur l'axe longitudinal de la lame.

7. Montre bracelet électronique selon la revendication 5, **caractérisée en ce que** ses constituants rigides, oscillateur à quartz (18), circuit intégré (20) et source d'alimentation (22) sont disposés sur les bords de la lame (12).

8. Montre bracelet électronique selon la revendication 7, **caractérisée en ce que** ledit circuit imprimé (14) est découpé, tout autour desdits constituants rigides, exception faite des pistes conductrices qui les relient aux autres constituants.

9. Montre bracelet électronique selon la revendication 6, dont l'un des constituants est un organe de commande (26), **caractérisée en ce que** ledit organe est disposé en regard du plot de colle (30), dans l'axe longitudinal de la lame.

10. Montre bracelet électronique selon la revendication 5, **caractérisée en ce que** sa source d'alimentation est un accumulateur (22) et **en ce qu'**elle comporte, en outre, un générateur thermoélectrique (24) relié au circuit imprimé (14) pour charger l'accumulateur et fixé sur la lame (12) elle-même.

11. Montre bracelet électronique selon la revendication 10, **caractérisée en ce que** le générateur thermoélectrique (24) est collé sur la lame (12) au moyen d'une couche de colle élastique thermoconductrice (42).

12. Montre bracelet électronique selon la revendication 5, dont l'un des constituants est un affichage LCD, **caractérisée en ce que** ledit affichage (16) est constitué de deux bandes souples (46, 48) respectivement destinées à afficher l'heure et la minute, et comportant respectivement douze cases alignées en colonne portant la série des nombres 1, 2, 3, 4, 5, 6, 7, 8, 9, 10, 11 et 12 et douze cases alignées en colonne portant la série des nombres 00, 05, 10, 15, 20, 25, 30, 35, 40, 45, 50 et 55.

13. Montre bracelet selon l'une des revendications 1 à 12, **caractérisée en ce qu'**elle est glissée dans un fourreau en plastique souple (50).

14. Montre bracelet selon les revendications 12 et 13, **caractérisée en ce que** le fourreau (50) possède une fenêtre transparente (52) en regard de l'affichage LCD (16).
